# EUROPEAN PATENT APPLICATION

(11) **EP 3 130 969 A1**
(43) Date of publication of application: **15.02.2017**
(21) Application number: 16164531.2
(22) Date of filing: 08.04.2016
(51) Int. Cl.: G05B 15/02, G05B 23/02, G06F 11/32, F25D 27/00

(54) **METHOD AND DEVICE FOR SHOWING WORK STATE OF A DEVICE**

(30) Priority: 13.08.2015 CN 201510496957
(71) Applicant: Xiaomi Inc., Beijing 100085 (CN)
(72) Inventor: LIN, Tao, 100085 Haidian District (CN); CHU, Yueyue, 100085 Haidian District (CN); LU, Xiaochuang, 100085 Haidian District (CN)
(74) Representative: Loustalan, Paul William

(57) **Abstract**

Method and device for showing work state of a device are provided in the disclosure. The method may include: acquiring (202, 301) work state of a device; acquiring (204, 302) a particle animation model corresponding to the work state; and determining (206), according to the particle animation model, changing states in n display frames of at least one particle and playing (206), according to the changing states in n display frames of at least one particle, a particle animation, wherein n≥2 and n is an integer. By showing work state of a device in the form of a particle animation, the problem of a single show form caused by representing work state of a device in the form of text or icon in related art may be solved, showing work state of a device more intuitively and visually and enhancing interaction between a user and a device.

## Description

### FIELD

The present disclosure generally relates to the field of display technology, and more particularly to method and device for showing work state of a device.

### BACKGROUND

In people's daily life and work, people need a variety of household equipments. For example, common household equipments may include an air condition, a refrigerator, a washing machine, a water heater, an air cleaner, a water purifier and the like.

A household equipment may usually have different work states. For example, work states of an air conditioner may include different work states such as refrigeration, heating, dehumidifying, ventilation and the like. Work state of a device may always be displayed on a display panel of the device or on a display screen of a remote controller in the form of text or icon.

### SUMMARY

A method and device for showing work state of a device are provided in embodiments of the disclosure.

According to a first aspect of embodiments of the present disclosure, a method for showing work state of a device is provided, the method comprising: acquiring work state of a device; acquiring a particle animation model corresponding to the work state; and determining, according to the particle animation model, changing states in n display frames of at least one particle and playing, according to the changing states in n display frames of at least one particle, a particle animation, wherein n≥2 and n is an integer.

Alternatively, the particle animation model may include information about motion trajectory corresponding to each particle respectively. The step of determining, according to the particle animation model, changing states in n display frames of at least one particle, and playing, according to the changing states in n display frames of at least one particle, a particle animation may include: determining, for each particle, a position in each of the n display frames, according to information about motion trajectory corresponding to the particle; and playing the n display frames to form the particle animation.

Alternatively, the method further comprising: detecting, for a i^{th} particle, whether a position *p*(i,j+1) of the i^{th} particle in a (j+1)^{th} display frame is located outside of a predetermined display area, wherein both i and j are positive integers; and setting *p(i,* j+ 1) as an initial position of the i^{th} particle, if the position *p*(i, j+ 1) of the i^{th} particle in the (j+1)^{th} display frame is located outside of the predetermined display area.

Alternatively, the step of determining, for each particle, a position in each of the n display frames, according to information about motion trajectory corresponding to the particle may include: determining, for a i^{th} particle, a position *p*(i, j+1) of the i^{th} particle in a (j+1)^{th} display frame, according to a position *p*(i, j) of the i^{th} particle in a j^{th} display frame and a motion trajectory function *f*ᵢ corresponding to the i^{th} particle, wherein both i and j are positive integers; wherein, a position *p*(i,1) of the i^{th} particle in a 1^{st} display frame is an initial position of the i^{th} particle.

Alternatively, a motion trajectory corresponding to the motion trajectory function *f*ᵢ may include any one of a linear motion trajectory, a curve motion trajectory, a circular motion trajectory and a bouncing motion trajectory, or any combination thereof.

Alternatively, the particle animation model may further include information about display style corresponding to each particle respectively; the step of determining, according to the particle animation model, changing states in n display frames of at least one particle, and playing, according to the changing states in n display frames of at least one particle, a particle animation may further include: determining, for each particle, a display style in each of the n display frames, according to information about display style corresponding to the particle; wherein the display style may include any one of color, size, shape and display time, or any combination thereof.

Alternatively, the method further comprising: forming, for each display frame, a line successively connecting m particles included in the display frame, wherein m is an integer greater than or equivalent to 2.

By showing work state of a device in the form of a particle animation, a method for showing work state of a device provided in embodiments of the present disclosure may solve the problem of a single show form caused by representing work state of a device in the form of text or icon in related art, so as to achieve the technical effect of showing work state of a device more intuitively and visually and help to enhance interaction between a user and a device.

According to a second aspect of embodiments of the present disclosure, a device for showing work state of a device is provided, the device comprising: a state acquiring module, configured to acquire work state of a device; a model acquiring module, configured to acquire a particle animation model corresponding to the work state; and an animation playing module, configured to determine, according to the particle animation model, changing states in n display frames of at least one particle, and to play, according to the changing states in n display frames of at least one particle, a particle animation, wherein n≥2 and n is an integer.

Alternatively, the particle animation model may include information about motion trajectory corresponding to each particle respectively; the animation playing module may include: a position determining sub-module and an animation playing sub-module; the position determining sub-module is configured to determine, for each particle, a position in each of the n display frames, according to information about motion trajectory corresponding to the particle; and the animation playing sub-module is configured to play the n display frames to form the particle animation.

Alternatively, the animation playing module may further include a detecting sub-module and a setting sub-module; the detecting sub-module is configured to detect, for a i^{th} particle, whether a position *p*(1, j+1) of the i^{th} particle in a (j+1)^{th} display frame is located outside of a predetermined display area, wherein both i and j are positive integers; and the setting sub-module is configured to set *p*(i, j+ 1) as an initial position of the i^{th} particle, if the position *p*(i,j+1) of the i^{th} particle in the (j+1)^{th} display frame is located outside of the predetermined display area.

Alternatively, the position determining sub-module is configured to determine, for a i^{th} particle, a position *p*(i, j+1) of the i^{th} particle in a (j+1)^{th} display frame according to a position *p*(i, j) of the i^{th} particle in a j^{th} display frame and a motion trajectory function *f*ᵢ corresponding to the i^{th} particle, wherein both i and j are positive integers; wherein, a position *p*(i, 1) of the i^{th} particle in a 1^{st} display frame is an initial position of the i^{th} particle.

Alternatively, a motion trajectory corresponding to the motion trajectory function *f*ᵢ may include any one of a linear motion trajectory, a curve motion trajectory, a circular motion trajectory and a bouncing motion trajectory, or any combination thereof.

Alternatively, the particle animation model may further include information about display style corresponding to each particle respectively; the animation playing module may further include a style determining sub-module; the style determining sub-module is configured to determine, for each particle, a display style in each of the n display frames, according to information about display style corresponding to the particle; wherein the display style may include any one of color, size, shape and display time, or any combination thereof.

Alternatively, the animation playing module may further include a line forming sub-module; the line forming sub-module is configured to form, for each display frame, a line successively connecting m particles included in the display frame, wherein m is an integer greater than or equivalent to 2.

By showing work state of a device in the form of particle animation, a device for showing work state of a device provided in the present embodiment may solve the problem of a single show form caused by representing work state of a device in the form of text or icon in related art, so as to achieve the technical effect of showing work state of a device more intuitively and visually and help to enhance interaction between a user and a device.

According to a third aspect of embodiments of the present disclosure, a device for showing work state of a device is provided, the device comprising: a processor and a memory for storing instructions executable by the processor, wherein the processor is configured to: acquire work state of a device; acquire a particle animation model corresponding to the work state; and determine, according to the particle animation model, changing states in n display frames of at least one particle and play, according to the changing states in n display frames of at least one particle, a particle animation, wherein n≥2 and n is an integer.

The processor may be further configured to carry out the method for showing work state of a device as described herein.

By showing work state of a device in the form of particle animation, a device for showing work state of a device provided in the present embodiment may solve the problem of a single show form caused by representing work state of a device in the form of text or icon in related art, so as to achieve the technical effect of showing work state of a device more intuitively and visually and help to enhance interaction between a user and a device.

According to a fourth aspect of embodiments of the present disclosure, there is provided a computer program including instructions for executing the steps of a method for showing work state of a device as described above when said program is executed by a computer.

This program can use any programming language and take the form of source code, object code or a code intermediate between source code and object code, such as a partially compiled form, or any other desirable form.

According to a fifth aspect of embodiments of the present disclosure, there is provided a recording medium readable by a computer and having recorded thereon a computer program including instructions for executing the steps of a method for showing work state of a device as described above.

The recording medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the recording medium can be an integrated circuit in which the program is incorporated, the circuit being adapted to execute the method in question or to be used in its execution.

Embodiments of the disclosure may provide at least some of the following beneficial effects: By showing work state of a device in the form of particle animation, the problem of a single show form caused by representing work state of a device in the form of text or icon in related art may be solved, so as to achieve the technical effect of showing work state of a device more intuitively and visually and help to enhance interaction between a user and a device.

It is to be understood that both the forgoing general description and the following detailed description are exemplary only, and are not restrictive of the present disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a schematic diagram illustrating an implement environment according to an exemplary embodiment.
Fig. 2 is a flow diagram illustrating a method for showing work state of a device according to an exemplary embodiment.
Fig. 3A is a flow diagram illustrating a method for showing work state of a device according to another exemplary embodiment.
Figs. 3B-3H is a schematic diagram illustrating a particle motion trajectory according to an exemplary embodiment.
Fig. 3I is a schematic diagram illustrating a display frame in which a line acts as an element according to another exemplary embodiment.
Fig. 4 is a block diagram illustrating a device for showing work state of a device according to an exemplary embodiment.
Fig. 5 is a block diagram illustrating a device for showing work state of a device according to another exemplary embodiment.
Fig. 6 is a block diagram illustrating a device according to an exemplary embodiment.

### DETAILED DESCRIPTION

Reference will now be made in detail to exemplary embodiments, examples of which are illustrated in the accompanying drawings. The following description refers to the accompanying drawings in which same numbers in different drawings represent same or similar elements unless otherwise described. The implementations set forth in the following description of exemplary embodiments do not represent all implementations consistent with the invention. Instead, they are merely examples of device and methods consistent with aspects related to the invention as recited in the appended claims.

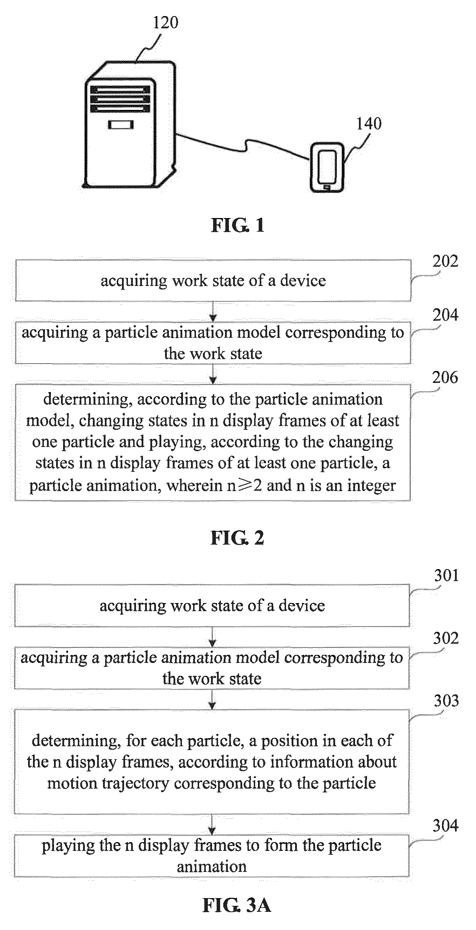

Fig. 1 is a schematic diagram illustrating an implement environment according to an exemplary embodiment. The implement environment may include a household equipment 120.

A household equipment 120 may be a traditional household equipment or a smart household equipment. For example, smart household equipments may include but not limited to a smart air condition, a smart refrigerator, a smart washing machine, a smart water heater, a smart electric cooker, a smart air cleaner, a smart water purifier and the like.

Alternatively, as shown in Fig. 1, the implement environment may further include: a control device 140.

The control device 140 may be a remote controller, or may be a mobile terminal such as a mobile phone, a tablet computer and the like. The control device 140 may connect to the household equipment 120 in a wired or wireless way. The control device 140 may be used for controlling start and stop of the household equipment 120 and work state of the household equipment 120. A wired way may include but not limited to wired network, Universal Serial Bus (USB) and the like; a wireless way may include but not limited to wireless network, infrared ray and the like.

In addition, a relationship between a control device 140 and a household equipment 120 may be a one-to-one or one-to-many relationship. That is to say, one control device 140 may be used to control one household equipment 120 independently, or to control a plurality of same or different household equipments 120.

A household equipment 120 and/or a control device 140 may be configured with a display panel. The display panel may be used to display a particle animation for showing work state of a device involved in embodiments of the present disclosure.

Therefore, a method for showing work state of a device provided in embodiments of the present disclosure may be used in a household equipment 120, and may also be used in a control device 140 connected with a household equipment 120. In order to simplify the description, in the following embodiments of respective methods, a control device is used as a main body of performing respective steps by way of example unless otherwise described, but it's not limited in the context.

Fig. 2 is a flow diagram illustrating a method for showing work state of a device according to an exemplary embodiment. The method may include the following steps.

In step 202, work state of a device may be acquired.

In step 204, a particle animation model corresponding to the work state may be acquired.

In step 206, changing states in n display frames of at least one particle may be determined according to the particle animation model, and a particle animation may be played according to the changing states in n display frames of at least one particle, wherein n≥2 and n is an integer.

In conclusion, by showing work state of a device in the form of a particle animation, a method for showing work state of a device provided in embodiments of the present disclosure may solve the problem of a single show form caused by representing work state of a device in the form of text or icon in related art, so as to achieve the technical effect of showing work state of a device more intuitively and visually and help to enhance interaction between a user and a device.

Fig. 3A is a flow diagram illustrating a method for showing work state of a device according to another exemplary embodiment. In the present embodiment, the method is used in a control device connected with a household equipment by way of example. The method may include the following steps.

In step 301, work state of a device may be acquired.

A control device may acquire work state of a household equipment. A household equipments may include but not limited to an air condition, a refrigerator, a washing machine, a water heater, an electric cooker, an air cleaner, a water purifier and the like. A household equipment may be a traditional household equipment or a smart household equipment.

A household equipment may usually have different work states. For example, work states of an air condition may include different work states such as refrigeration, heating, dehumidifying, ventilation and the like. For example, work states of an electric cooker may include different work states such as cooking rice, cooking congee, cooking soup, heat preservation and the like.

In some embodiments, operating states can be detected by sensors that are either disposed and integrated in the home appliance, or additionally disposed outside the home appliance. In some embodiments, the sensors could be one or more sensors of a same type, or could be one or more different types of sensors. By way of example, for an air conditioner, one or more temperature sensors can be set to detect the operating state of refrigeration and heating, one or more humidity sensors can be set to detect the operating state of dehumidifying, and one or more airflow rate sensors can be set to detect the operating state of ventilation. The sensors described above can be either disposed in the home appliance, or substantially uniformly disposed in the work environment of the air conditioner.

In some embodiments, some parameters indicating the status changes in a same operating state, such as change rate of refrigeration temperature or heating temperature, as well as wind speed of ventilation, can also be detected by the one or more sensors of a same type, or the one or more different types of sensors above.

In some embodiments, a plurality of temperature sensors and airflow rate sensors can be disposed in an electric cooker to detect the temperature distribution and airflow change in the electric cooker during operating.

In some embodiments, a control device can acquire operating states by wired or wireless connections, such as internet, internet of things, WiFi, bluetooth, infrared, etc..

In some embodiments, operating states of the appliance can be acquired in real time or in a sampled manner. In some embodiments, the operating states may be acquired for an appliance at predetermined time, or acquiring the state for a multiple of appliances at predetermined time.

In some embodiments, a home appliance is internally disposed with a processing component. The processing component, which has a memory unit, changes operating states of a home appliance based on operating instructions from an operator and stores the operating states in the memory unit. A communication unit of a home appliance sends the operating states that stored in the memory unit to the control device. For instance, when an operator presses a heating button on an electric cooker, the electric cooker will enter into a heating state and memorize the heating state. After the electric cooker is on the heating state, the heating state will be sent to the control device.

In some embodiments, a home appliance, which is internally disposed with a processing component, could acquire operating states through the processing component and will send the operating states to the control device. In some embodiments, a processing component changes operating states of a home appliance based on operating instructions, and sends the changed operating states to a control device at the same time. In some embodiments, when an operator presses a dehydration button on a washing machine, the washing machine will enter into a dehydration state. Triggered by the press of the button from the operator, the processing component of the washing machine will send the dehydration state to the control device.

In some embodiments, when the control device is a remote controller for a home appliance, the remote controller itself knows the changes of operating states for the home appliance since the remote controller sends instructions of changing the operating states to the home appliance. The remote controller stores information on the operating states corresponding to instructions of changing the operating states when the remote controller sends the instructions to the home appliance. In some embodiments, a remote controller sends an instructions of purifying air (an operating state) to an air purifier, and memorizes the corresponding the operating state at the same time.

In step 302, a particle animation model corresponding to the work state may be acquired.

A control device may acquire a particle animation model corresponding to the work state. In one possible alternative implementation, a control device may store at least one set of correspondence relationship between work state and a particle animation model. The control device may query and acquire a corresponding particle animation model from the above correspondence relationship after acquiring work state of a household equipment. Moreover, for one household equipment, its different work states usually may correspond to different particle animation models.

A particle animation model may be used to determine changing states of each particle in a particle animation. A particle animation model may include information about motion trajectory corresponding to each particle respectively. A particle animation model may be used to determine changing states of position of each particle in a particle animation. The information about motion trajectory corresponding to each particle may be used to determine changing states of position of the particle. The information about motion trajectory may be a motion trajectory function, or may be a predetermined position of a particle in each display frame, or may be a random algorithm used to determine a position of a particle in each display frame.

Alternatively, a particle animation model may further include information about display style corresponding to each particle respectively. A particle animation model may further be used to determine changing states of display style of each particle in a particle animation. The information about display style corresponding to each particle may be used to determine changing states of display style of the particle. The display style may include but not limited to any one of color, size, shape and display time, or any combination thereof. Different particles may correspond to a same display style or different display styles. For each particle, its display style may be unchanged or changed in time domain.

In some embodiments, a particle animation model corresponding to the operating state may be retrieved from a particle animation model library by using the operating state as an index, and the corresponding relationship between an operating state and a particle animation model as well as the particle animation model library can be stored in a memory of a control device. In other embodiments, the corresponding relationship between an operating state and a particle animation model as well as the particle animation model library can be stored in a memory of a server. In some embodiments, the corresponding relationship between an operating state and a particle animation model can be stored in a memory of a control device, and the particle animation model library can be stored in a memory of a server. As such, upon the acquirement of the operating state from the appliance, the particle animation model can be retrieved from the server in accordance with the acquired operating state as well as the corresponding relationship between the operating state and the particle animation model.

In some embodiments, a particle animation model, which is corresponding to an operating state, can be acquired according to the operating state of the appliance, comprising: parameters of the particle animation model correspond to change rates of the operating state. In some embodiments, the greater the suction of a dust cleaner is, the faster the color of the particle animation will change; in some embodiments, while the states of a electric cooker are changed from heating to warming, the particle animation will shift from drastic change to mild change.

In step 303, for each particle, a position in each of the n display frames may be determined according to information about motion trajectory corresponding to the particle, wherein n≥2 and n is an integer.

A particle animation model may include changing states of at least one particle in n successive display frames. For each particle, a control device may determine a position of the particle in each of the n successive display frames according to information about motion trajectory corresponding to the particle.

Taking an example of information about motion trajectory being a motion trajectory function, in one possible implementation, for a i^{th} particle, a position *p*(i, j+ 1) of the i^{th} particle in a (j+1)^{th} display frame may be determined according to a position p(i, j) of the i^{th} particle in a j^{th} display frame and a motion trajectory function *f*ᵢ corresponding to the i^{th} particle, wherein both i and j are positive integers. A position *p*(i, 1) of the i^{th} particle in a 1^{st} display frame is an initial position of the i^{th} particle.

A particle animation may be a two-dimensional plane animation or a three-dimensional space animation. For a two-dimensional plane animation, a position *p*(i, j) of the i^{th} particle in a j^{th} display frame may be represented as a position coordinate (x(i, j), y(i, j)). For a three-dimensional space animation, a position *p*(i,j) of the i^{th} particle in a j^{th} display frame may be represented as a position coordinate (x(i, j), y(i, j), z(i, j)).

It is to be noted that, for any one of the particles, its initial position may be a predetermined fixed value. For example, a position coordinate corresponding to an initial position of the 1^{st} particle may be a fixed value (0,100). Or, for any one particle, its initial position may be a variable value chosen within a predetermined area. For example, a position coordinate corresponding to an initial position of the 1^{st} particle may be a variable value chosen within a predetermined rectangular area formed by position coordinates (0,98), (0,102), (4,98) and (4,102). A way of choosing a value may be a random selection way or an ordinal selection way.

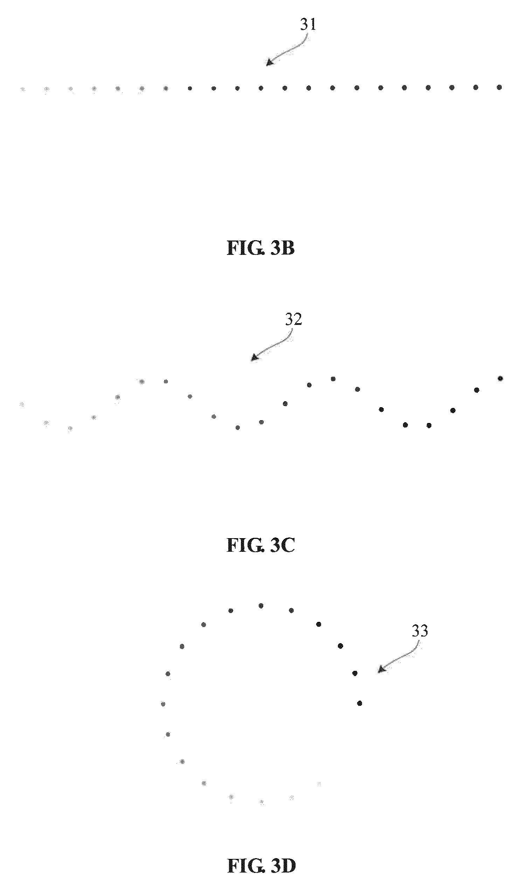

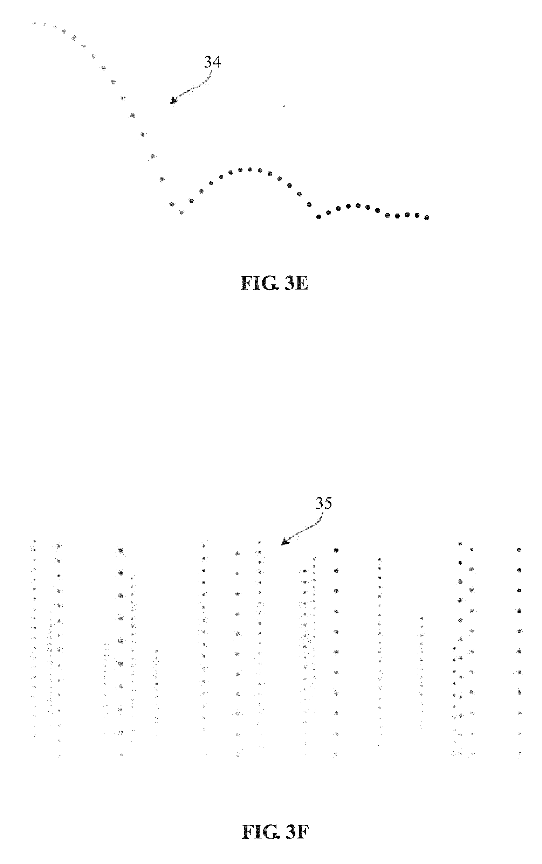

Alternatively, a motion trajectory corresponding to the motion trajectory function may include but not limited to one of a linear motion trajectory, a curve motion trajectory, a circular motion trajectory and a bouncing motion trajectory, or any combination thereof. Referring to Figs. 3B-3E in combination, Fig. 3B is a schematic diagram illustrating a linear motion trajectory 31 of a single particle, Fig. 3C is a schematic diagram illustrating a curve motion trajectory 32 of a single particle, Fig. 3D is a schematic diagram illustrating a circular motion trajectory 33 of a single particle, Fig. 3E is a schematic diagram illustrating a bouncing motion trajectory 34 of a single particle.

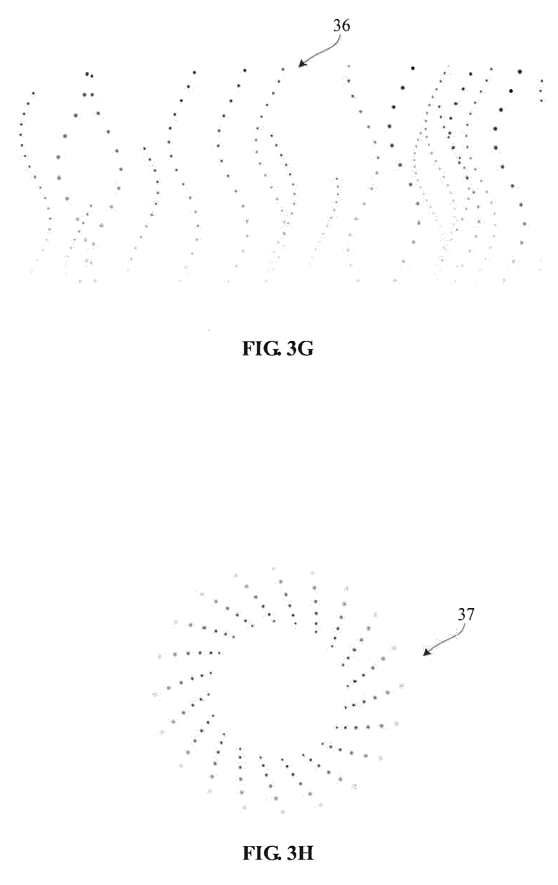

The above Figs. 3B-3E illustrate a motion of a single particle. A particle animation model may include information about motion trajectory corresponding to a plurality of particles respectively, thus forming a large scale particle motion. Referring to Figs. 3F-3H in combination, Fig. 3F is a schematic diagram illustrating linear motion trajectories 35 of a plurality of particles. Linear motion of a plurality of particles may used to represent work state of finishing cooking rice of an electric cooker, so as to show the effect of water vapor intuitively and visually. Fig. 3G is a schematic diagram illustrating curve motion trajectories 36 of a plurality of particles. Curve motion of a plurality of particles may used to represent work state of purifying water of a water purifier, so as to show the effect of bubble intuitively and visually. Fig. 3H is a schematic diagram illustrating circular motion trajectories 37 of a plurality of particles. Circular motion of a plurality of particles may used to represent work state of an air cleaner or a dust collector, so as to show the effect of drawing in air by a device intuitively and visually. Of course, in the above Figs. 3F-3H, different particles correspond to the same type of motion trajectory, in other possible implementations, different particles may correspond to different types of motion trajectories, thus forming a variety of particle animation.

In one possible implementation, a linear motion trajectory may use a linear function. Taking an example of a linear motion trajectory of a single particle along x-axis direction, the corresponding motion trajectory function *f*ᵢ maybe: x(i, j+1)=x(i,j)+a. x(i,1) maybe a predetermined value. When a is a constant, the function represents an uniform linear motion trajectory along x-axis direction; when a is a variable, the function represents a variable linear motion trajectory along x-axis direction. A linear motion trajectory along y-axis direction and a linear motion trajectory along z-axis direction may refer to the above linear motion trajectory along x-axis direction. Moreover, a linear motion trajectory along oblique direction in two-dimensional plane may be formed when changing position coordinates of both x-axis and y-axis at the same time. A linear motion trajectory in three-dimensional space may be formed when changing position coordinates of x-axis, y-axis and z-axis at the same time.

In one possible implementation, a curve motion trajectory may use a trigonometric function such as sin, cos, tan and the like or may use a power function. Taking an example of a curve motion trajectory of a single particle in a plane formed by x-axis and y-axis, the corresponding motion trajectory function *f*ᵢ may be: x(i, j+ 1) = x(i, j) + a, y(i, j+ 1) = sin (x(i, j+ 1)). x(i,1) may be a predetermined value, and a is a constant or a variable.

In one possible implementation, taking an example of a circular motion trajectory of a single particle in a plane formed by x-axis and y-axis, the corresponding motion trajectory function *f*ᵢ may be: angle (i, j+ 1) = angle(i, j) + a, radius=b ; x(i, j+ 1)= cos (angle(i, j+1)) × radius ; y(i, j+ 1) = sin (angle(i, j+ 1)) × radius angle(i, j) represents an offset angle of a i^{th} particle in a j^{th} display frame relative to the centre of a circle. a represents variable quantity of offset angles in two adjacent frames. radius represents a radius, and angle (i, 1) may be a predetermined value. An uniform circular motion trajectory may be formed when both a and b are constant. A spiral motion trajectory may be formed when b is a variable.

Of course, the above enumerated motion trajectory functions are only exemplary and explanatory, and are not used to limit the disclosure. Moreover, in the above description, information about motion trajectory is a motion trajectory function by way of example. In other possible implementations, the information about motion trajectory may be a predetermined position of a particle in each display frame, or may be a random algorithm used to determine a position of a particle in each display frame.

Moreover, for a single particle, uniform motion may be formed when variable quantity of positions in two adjacent frames is a constant; variable motion may be formed when variable quantity of positions in two adjacent frames is a variable. For example, uniform linear motion may be formed by setting parameter a in a motion trajectory function corresponding to the above linear motion trajectory as a constant; variable linear motion may be formed by setting the parameter a as a variable. For example, uniform circular motion may be formed by setting parameters a and b in a motion trajectory function corresponding to the above circular motion trajectory as a constant; variable circular motion may be formed by setting the parameter a as a constant and setting b as a variable.

In step 304, the n display frames is played to form the particle animation.

The control device may play the n display frames, showing work state of a device through a particle animation.

Alternatively, when the particle animation model may further include information about display style corresponding to each particle respectively, before the above step 304, the method further comprising: determining, for each particle, a display style in each of the n display frames, according to information about display style corresponding to the particle; wherein the display style may include any one of color, size, shape and display time, or any combination thereof. As such, the particle animation model may further include changing states of display style of each particle in addition to motion states of each particle. For example, the color of a particle may change constantly over time; for another example, the size of a particle may change constantly over time; for another example, the display time of different particles may be divisional, and the like.

In one example, a particle animation determined by a particle animation model may include a plurality of particles. For each single particle thereof, on one hand, the particle moves according to a motion trajectory determined by information about motion trajectory. On the other hand, the particle changes its display style according to information about display style. For example, it may changes color, scales, flickers and the like, so as to show work state of a device more visually and realistically, so that a user can know work state of a device quickly and clearly according to a particle animation, this may be helpful to improve efficiency of man-machine interaction.

It is to be supplemented that, in order to make use of memory resources more reasonably and effectively, a mechanism for recycling a particle is further provided in the present embodiment. For a i^{th} particle, after determining a position *p*(i, j+1) of the i^{th} particle in a (j+1)^{th} display frame, it may be detected that whether a position *p*(1, j+ 1) of the i^{th} particle in a (j+1)^{th} display frame is located outside of a predetermined display area, and *p*(i, j+1) may be set as an initial position of the i^{th} particle if the position *p*(i, j+ 1) of the i^{th} particle in the (j+1)^{th} display frame is located outside of the predetermined display area. Namely, a position of a particle may be set as its initial position when the particle moves outside of its corresponding predetermined display area, so as to recycle a particle. For example, for a particle animation in which a large number of particles move upward from a position(s) below a predetermined display area, a user may feel visually that an infinite number of particles appear constantly from a position(s) below a predetermined display area and disappear above the predetermined display area. However, only a limited number (for example, two hundreds) of particles need to be maintained. When any one of the particles move to the top of a predetermined display area, the particle may be recycled to be placed at an initial position below a predetermined display area. Then the particle may move from bottom to top again, thus the recycle will carry on.

Moreover, as described above, for any one of the particles, its initial position may be a predetermined fixed value, or may be a variable value chosen within a predetermined area. Therefore, a 1^{st} particle is still taken as an example. If a position coordinate corresponding to an initial position of the 1^{st} particle is a fixed value (0,100), the position coordinate of the 1^{st} particle may be reset to a fixed value (0,100) when the 1^{st} particle moves outside of a predetermined display area every time. If a position coordinate corresponding to an initial position of the 1^{st} particle is a variable value chosen within a predetermined rectangular area formed by position coordinates (0,98), (0,102), (4,98) and (4,102), then the position coordinate of the 1^{st} particle may be reset to a position coordinate chosen within the above predetermined rectangular area when the 1^{st} particle moves outside of the predetermined display area every time. For example, taking an example of a random selection way, the position coordinate of the 1^{st} particle may be reset to (2,99) when the 1^{st} particle moves outside of the predetermined display area for the first time; the position coordinate of the 1^{st} particle may be reset to (4,101) when the 1^{st} particle moves outside of the predetermined display area for the second time; the position coordinate of the 1^{st} particle may be reset to (1,100) when the 1^{st} particle moves outside of the predetermined display area for the third time, and so on. Moreover, when a way of choosing a value is an ordinal selection way, a position coordinate reset after a particle moves outside of a predetermined display area every time may be determined according to a predetermined selection order.

Compared to that release a particle when the particle moves outside of its corresponding predetermined display area and recreate a particle, using the above mechanism for recycling a particle, an animation effect that an infinite number of particles appear constantly may be formed with only a limited number of particles to be maintained. This may both save occupation of memory resources effectively, and avoid a problem of too much system process overhead caused by releasing and creating a particle repeatedly. Moreover, compared to that set an initial position of a particle as a fixed value, by setting an initial position of a particle as a variable within a predetermined display area, dynamic change of details may be realized on the premise of maintaining a overall dynamic effect presented by a particle animation. This may be helpful to improve vividness and richness of a particle animation and to show work state of a device better.

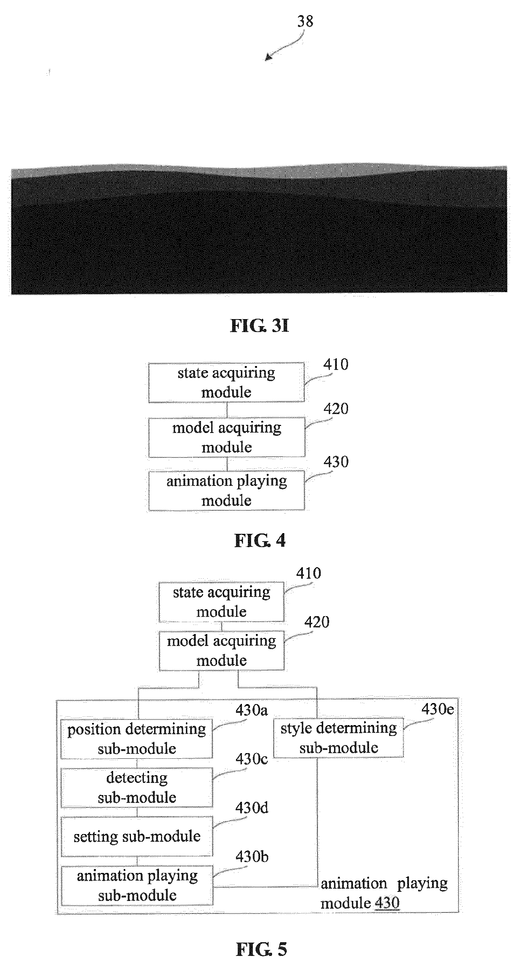

It is further to be supplemented that, in one possible implementation, after the above step 303, the method may further include the following steps: forming, for each display frame, a line successively connecting m particles included in the display frame, wherein m is an integer greater than or equivalent to 2. An animation in which a line acts as an element may be realized by connecting a plurality of particles. For example, referring to Fig. 3I in combination, Fig. 3I is a schematic diagram illustrating a display frame 38 in which a line acts as an element. As shown in Fig. 3I a wavy curve may be formed by connecting a plurality of particles moving up and down repeatedly along a straight line in vertical direction, so as to show the effect of water flow or air flow intuitively and visually.

It is further to be supplemented that, a single particle may be a single pixel point, or may be a circle, a triangle, a polygon, a star or other particular pattern formed by a number of pixel points, the present embodiment is not limited in the context.

In other embodiments, the method of the present disclosure further comprises: acquiring an operating state of an appliance; detecting values of key parameters for the appliance in the operating state and calculating a value distribution of key parameters based on the detected values of key parameters; retrieving a particle animation model that corresponds to the operating state, wherein a particle distribution of the particle animation model corresponds to the value distribution of the key parameters; determining, for each particle, a position in each of the n display frames, according to information on motion trajectory of the particle; wherein n≥2 and n is an integer; presenting the n display frames to demonstrate the particle animation.

In some embodiments, the value distribution of the key parameters for the appliance can be acquired by sensors disposed in the appliance or sensors additionally disposed. By way of example, for an electric cooker cooking rice, the key parameters could be temperature. The temperature distribution in the electric cooker, when the electric cooker is cooking rice, could be acquired according to the sensors disposed in the appliance or the sensors additionally disposed. The appliance is controlled to acquire a particle animation model that corresponds to the operating state, and the particle animation model could be set in advance according to the appliance. In some embodiments, a particle distribution of the particle animation model corresponds to the temperature distribution, for instance, areas with higher temperature correspond to the areas distributed with more particles. In some embodiments, areas with higher temperature correspond to the areas indicated using particles with higher tone, and areas with lower temperature correspond to the areas indicated using particles with lower tone.

In other embodiments, a control device plays n display frames, and illustrates operating states of the appliance by the particle animation. The control device is set with a touch sensor for monitoring the touch of a user, and transforms the touch of the user into control instructions that fed back to the home appliance, and the home appliance could control its operating state according to the touch action of the user.

By way of example, for the effect of water vapor in an electric cooker. According to the foregoing embodiments, the control device plays the operating state of the appliance that demonstrated by particle animation. In some embodiments, the operating state of the appliance could be demonstrated as the particles being not uniformly distributed, for instance, some areas may have more particles and some areas may have less. Alternatively, the operating state of the appliance could be demonstrated as some areas having particles that move fast and some areas having particles that move slowly. A user could touch the particles on the screen by the operations, including but not limited to, sliding on the screen with fingers, clicking on the screen with fingers, pinching on the screen with thumb and forefinger, separating on the screen with thumb and forefinger. After the touch screen has received the touch from the user, the touch operation could be transformed into control instructions in accordance with the advance definition. Then the control instructions could be fed back to the home appliance to control the operating states of the appliance in accordance with the touch action of the user, so as to adjust the operating states of the home appliance, such as to change the operating state of non-uniform heating, change the operating state of non-uniform ventilation speed, and change the operating state of non-uniform distribution of water vapor etc..

In some embodiment, changes in a distribution of particles, such as densities, colors, moving speeds, patterns of particles can trigger the generation of controlling instructions. The controlling instructions will be sent to a home appliance, and can change the operating states of the home appliance correspondingly.

In some embodiments, parameters of operating states for a home appliance can be obtained based on the controlling instructions that change the states of the home appliance. For example, the parameters can be carried in the controlling instructions. As a result, the parameters can be retrieved from the controlling instructions. For example, a heating temperature of a water heater is 50°C, and a user could set a heating temperature of 50°C by a button on a panel of the water heater or by a remote controller. By analyzing the controlling instructions of the user, the heating temperature of 50°C can be retrieved from the controlling instructions. In alternative embodiments, the controlling instructions and corresponding parameters can be stored in a control device or a server, and a corresponding relationship can be created for the controlling instructions and corresponding parameters. By using the controlling instructions as index, the parameters corresponding to the controlling instructions can be obtained by retrieving in a control device or a server.

In some embodiments, the method includes: acquiring operating states of the appliance, and based on the operating states, acquiring a particle animation model that corresponds to the operating state. Then, for each particle, a position in each of the n display frames is determined, according to information on motion trajectory of the particle, wherein n≥2 and n is an integer. The n display frames are presented to demonstrate the particle animation. When the operating state changes, the method proceeds with reacquiring the particle animation model that corresponds to the operating state. For each particle, a position in each of the n display frames is determined, according to information on motion trajectory of the particle, wherein n≥2 and n is an integer. By way of example, for a sweeping robot, when the sweeping robot is on the sweeping state, the particle animation model that corresponds to the sweeping state is acquired. For instance, the model could be a particle animation model that corresponds to the track on which the sweeping robot is sweeping. Then the position of the particle in each of the n display frames is determined according to the particle animation model; wherein n≥2 and n is an integer. The n display frames are presented to demonstrate the particle animation. When the sweeping robot completes the sweep and is on the charging state, the particle animation model that corresponds to the charging state is reacquired. For each particle, a position in each of the n display frames is determined, according to information on motion trajectory of the particle; wherein n≥2 and n is an integer. The n display frames are presented to demonstrate the particle animation. In some embodiments, the operating states of the appliance could trigger the operations that control the appliance, such as vibration and voice. In some embodiment, operating states of the appliance can be acquired in real time or in a sampling manner, for instance, acquired by a sampling period of 5 minutes, or a sampling period of half an hour.

In some embodiments, the method includes: monitoring and acquiring the operating state for some appliance; determining front-end appliance and acquiring a first particle animation model that corresponds to the operating state of the front-end appliance; determining, for each particle, a position in each of the n display frames, according to information on motion trajectory of the particle; wherein n≥2 and n is an integer; presenting the n display frames to demonstrate the first particle animation. When the operating state of the appliance changes, a second particle animation model that corresponds to the changed operating state is acquired. Moreover, for each particle, a position in each of the n display frames is determined, according to information on motion trajectory of the particle; wherein n≥2 and n is an integer. Then the n display frames are presented to demonstrate the second particle animation that replaces the first particle animation.

In some embodiments, some home appliances may work simultaneously in the house, for example, a refrigerator is refrigerating, an air condition is ventilating, an electric cooker is cooking rice and a TV is telecasting. Anti-collision mechanism should be built for the operating states of the refrigerator, air conditioner, electric cooker and TV. In some embodiments, the anti-collision mechanism could be built by determining a front-end appliance (in other words, a first priority appliance). For instance, the front-end appliance could be determined by an electronic serial number, a MAC address, or an identity of the home appliance. In some embodiments, a TV could be exampled as front-end appliance. However, it should be noted that other home appliance can also be set as the front-end appliance. In some embodiments, the operating state of the TV could be telecasting TV series. In this case, the method includes: acquiring a first particle animation model that corresponds to the operating state of the TV according to the operating state of the TV; determining, for each particle, a position in each of the n display frames, according to information on motion trajectory of the particle; wherein n≥2 and n is an integer, presenting the n display frames to demonstrate the particle animation for the operating state of the TV. In some embodiments, the particle animation for an operating state of a TV is presented, if the electric cooker completes cooking and turns from a cooking state to a warming state. The control device could acquire the warming state of the electric cooker as well as acquire a second particle animation model that corresponds to the warming state. Then the control device determines, for each particle, a position in each of the n display frames, according to information on motion trajectory of the particle; wherein n≥2 and n is an integer, present the n display frames, and replace the first particle animation with the second particle animation. In some embodiments, a priority for the state change event could be set, for instance, the priority for a event of changing a cooking state to a warming state of an electric cooker could be medium, the priority for a event of changing a heating state to a boiling state of a water heater could be high, the priority for a event of changing normal operating state to abnormal operating state of home appliance could be high. The method may includes: determining to acquire the operating state with higher priority according to the degree of the priority when the operating state changes, and presenting the particle animation with higher priority accordingly, as well as replacing the current front-end animation with the animation of higher priority. In some embodiments, the operating state of higher priority could also trigger actions of the control device, such as vibration and/or voice.

In some embodiments, priority of abnormal operating state as well as the corresponding relationship of the particle animation model that corresponds to the abnormal operating state could be set in advance and stored in a memory of the control device. In some embodiments, they could also be stored in a cloud or server that disposed with data transmission channels to the control device.

In some embodiments, changes of operating states for appliance could be acquired by acquiring the changes of power consumption for the appliance. When the first state of power consumption for the appliance is greater than the second state of power consumption, the particle animation that corresponds to the first state has a greater changing degree than the particle animation that corresponds to the second state. In some embodiments, the priority to be triggered could be set through the intensity of the change of power consumption for the appliance. In some embodiments, the power consumption of the electric cooking during cooking rice is greater than the power consumption during warming. When the cooking state of the electric cooker is changed to the warming state, the particle animation that corresponds to the cooking state has a greater changing degree than the particle animation of the warming state. In some embodiments, an intelligent air purifier could be shifted from a normal operating state to a shutdown state due to failure. In this case, the power consumption of the intelligent air purifier would turn into zero in a short time, and the corresponding particle animation would be replaced from a dynamic particle animation to a static particle animation. In some embodiments, vibration and/or voice could also be triggered.

In some embodiments, different interfaces correspond to different home appliances. Based on the aforementioned embodiments, the home appliance which is determined as a front-end appliance can be used to determine the interface which is currently displayed. In some embodiments, the interface of the front-end appliance is displayed on the control device while the interfaces for other appliances are running in the background.

In conclusion, by showing work state of a device in the form of a particle animation, a method for showing work state of a device provided in the present embodiment may solve the problem of a single show form caused by representing work state of a device in the form of text or icon in related art, so as to achieve the technical effect of showing work state of a device more intuitively and visually and help to enhance interaction between a user and a device.

In addition, a motion trajectory of a particle may be determined according to a motion trajectory function. Since a motion trajectory function may have a number of adjustment parameters, a variety of particle animations may be achieved. This may be applicable for more devices and for showing more work states of a device.

In addition, by setting *p*(1, j+1) as an initial position of a i^{th} particle after detecting that the position *p*(i, j+ 1) of the i^{th} particle in a (j+1)^{th} display frame is located outside of a predetermined display area, recycling a particle may be achieved. Thus an animation effect that an infinite number of particles appear constantly may be formed with only a limited number of particles to be maintained. This may both save occupation of memory resources effectively, and avoid a problem of too much system process overhead caused by releasing and creating a particle repeatedly.

It is further to be supplemented that, the above embodiments only take an example of showing work state of a household equipment such as an air condition, an electric cooker, a water purifier and the like by a particle animation. In practice, work state of other electric devices may also be shown by a particle animation, the present disclosure is not limited in the context.

The following are embodiments of a device of the present disclosure, which may be used to carry out embodiments of a method of the present disclosure. With respect to details not described in embodiments of a device of the present disclosure, please refer to embodiments of a method of the present disclosure.

Fig. 4 is a block diagram illustrating a device for showing work state of a device according to an exemplary embodiment. The device may be used in a household equipment 120 in implement environment shown in Fig. 1, and may also be used in a control device 140 connected with a household equipment 120. The device may include: a state acquiring module 410, a model acquiring module 420, and an animation playing module 430.

The state acquiring module 410 may be configured to acquire work state of a device.

The state acquiring module 410 includes one or more sensors. For example, the sensors could be one or more sensors of a same type, or one or more different types of sensors. The sensors could be one of the thermal sensor, gas sensor, force sensor, magnetic sensor, humidity sensor, acoustic sensor, radiation sensitive sensor, color-sensitive sensor, taste-sensitive sensor, and the combination thereof. In some embodiments, one or more temperature sensors can be set to acquire operating states of refrigeration and heating, one or more humidity sensors can be set to acquire operating state of dehumidifying, and one or more airflow rate sensors can be set to acquire operating state of ventilation. The sensors above can be either disposed in the home appliance, or substantially uniformly disposed in the work environment of the air condition.

In some embodiments, some parameters indicating the status changes within a same operating state, such as change rate of refrigeration temperature or heating temperature, as well as wind speed of ventilation, can also be acquired by the one or more sensors of a same type, or the one or more different types of sensors above. In some embodiments, a plurality of temperature sensors and airflow rate sensors can be disposed in an electric cooker to acquire the temperature distribution and airflow change in the electric cooker during operating.

The model acquiring module 420 may be configured to acquire a particle animation model corresponding to the work state acquired by the state acquiring module 410.

The animation playing module 430 may be configured to determine, according to the particle animation model acquired by the model acquiring module 420, changing states in n display frames of at least one particle, and to play, according to the changing states in n display frames of at least one particle, a particle animation, wherein n≥2 and n is an integer.

In conclusion, by showing work state of a device in the form of particle animation, a device for showing work state of a device provided in the present embodiment may solve the problem of a single show form caused by representing work state of a device in the form of text or icon in related art, so as to achieve the technical effect of showing work state of a device more intuitively and visually and help to enhance interaction between a user and a device.

Fig. 5 is a block diagram illustrating a device for showing work state of a device according to another exemplary embodiment. The device may be used in a household equipment 120 in implement environment shown in Fig. 1, and may also be used in a control device 140 connected with a household equipment 120. The device may include: a state acquiring module 410, a model acquiring module 420, and an animation playing module 430.

The state acquiring module 410 may be configured to acquire work state of a device.

The model acquiring module 420 may be configured to acquire a particle animation model corresponding to the work state acquired by the state acquiring module 410.

The animation playing module 430 may be configured to determine, according to the particle animation model acquired by the model acquiring module 420, changing states in n display frames of at least one particle, and to play, according to the changing states in n display frames of at least one particle, a particle animation, wherein n≥2 and n is an integer.

Alternatively, the particle animation model may include information about motion trajectory corresponding to each particle respectively.

Accordingly, the animation playing module 430 may include a position determining sub-module 430a and an animation playing sub-module 430b.

The position determining sub-module 430a may be configured to determine, for each particle, a position in each of the n display frames, according to information about motion trajectory corresponding to the particle.

The animation playing sub-module 430b may be configured to play the n display frames to form the particle animation.

Accordingly, the animation playing module may further include a detecting sub-module 430c and a setting sub-module 430d.

The detecting sub-module 430c may be configured to detect, for a i^{th} particle, whether a position *p*(i, j+ 1) of the i^{th} particle in a (j+1)^{th} display frame is located outside of a predetermined display area, wherein both i and j are positive integers.

The setting sub-module 430d may be configured to set *p*(i, j+ 1) as an initial position of the i^{th} particle, if the position *p*(1, j+1) of the i^{th} particle in the (j+1)^{th} display frame is located outside of the predetermined display area.

Alternatively, the position determining sub-module 430a may be configured to determine, for a i^{th} particle, a position *p*(i, j+1) of the i^{th} particle in a (j+1)^{th} display frame according to a position *p*(i, j) of the i^{th} particle in a j^{th} display frame and a motion trajectory function *f*ᵢ corresponding to the i^{th} particle, wherein both i and j are positive integers. A position *p*(i, 1) of the i^{th} particle in a 1^{st} display frame is an initial position of the i^{th} particle.

Alternatively, a motion trajectory corresponding to the motion trajectory function *f*ᵢ may include any one of a linear motion trajectory, a curve motion trajectory, a circular motion trajectory and a bouncing motion trajectory, or any combination thereof.

Accordingly, the animation playing module 430 may further include a style determining sub-module 430e.

The style determining sub-module 430e may be configured to determine, for each particle, a display style in each of the n display frames, according to information about display style corresponding to the particle. The display style may include any one of color, size, shape and display time, or any combination thereof.

Alternatively, the animation playing module 430 may further include a line forming sub-module (not shown).

The line forming sub-module may be configured to form, for each display frame, a line successively connecting m particles included in the display frame, wherein m is an integer greater than or equivalent to 2.

In conclusion, by showing work state of a device in the form of a particle animation, a device for showing work state of a device provided in embodiments of the present disclosure may solve the problem of a single show form caused by representing work state of a device in the form of text or icon in related art, so as to achieve the technical effect of showing work state of a device more intuitively and visually and help to enhance interaction between a user and a device.

In addition, a motion trajectory of a particle may be determined according to a motion trajectory function. Since a motion trajectory function may have a number of adjustment parameters, a variety of particle animations may be achieved. This may be applicable for more devices and for showing more work states of a device.

In addition, by setting *p*(i, j+ 1) as an initial position of a i^{th} particle after detecting that the position *p*(i,j+1) of the i^{th} particle in a (j+1)^{th} display frame is located outside of a predetermined display area, recycling a particle may be achieved. Thus an animation effect that an infinite number of particles appear constantly may be formed with only a limited number of particles to be maintained. This may both save occupation of memory resources effectively, and avoid a problem of too much system process overhead caused by releasing and creating a particle repeatedly.

In addition, the display state of the particles could be fed back to control units of the home appliance or operators according to the particle animation. Also, the home appliance could be adjusted according to the display state of the particles.

In some embodiments, the display state of the particles, which indicates the heating state of an electric cooker, could be non-uniform during the predetermined time. Control units or the operators could adjust the heating unit to improve the local heating phenomenon according to the display state of the particles, so as to make the heating distribution uniform and improve the operation of the home appliance.

In some embodiments, the further comprises: a state acquiring sub-module configured to detect values of key parameters for the appliance in the operating state; and a calculation module, configured to calculate a value distribution of the key parameters based on the detected values of the key parameters. In this example, the animation playing module, is further configured to determine, according to the particle animation model and the value distribution of key parameters, changing states in n display frames of at least one particle.

In some embodiments, the display is a touch screen, and the device further comprises: a user-action receiving module, configured to receive via the touch screen, a user action executed on the particle animation to change a distribution of particles within the particle animation; an instruction module, configured to generate a control instruction in accordance with the user action; and a control module, configured to control the appliance to change its operating state based on the control instruction.

With respect to the devices in above embodiments, specific manners in which respective modules perform operations have been described in detail in embodiments related to methods, which will not be elaborated herein.

A device for showing work state of a device is further provided in an exemplary embodiment of the present disclosure. The device may implement a method for showing work state of a device provided by the present disclosure. The device may include: a processor; and a memory for storing instructions executable by the processor. The processor may be configured to: acquire work state of a device; acquire a particle animation model corresponding to the work state; and determine, according to the particle animation model, changing states in n display frames of at least one particle and play, according to the changing states in n display frames of at least one particle, a particle animation, wherein n≥2 and n is an integer.

Alternatively, the processor may further be configured to: detect, for a i^{th} particle, whether a position *p*(i, j+1) of the i^{th} particle in a (j+1)^{th} display frame is located outside of a predetermined display area, wherein both i and j are positive integers; and set *p*(i, j+ 1) as an initial position of the i^{th} particle, if the position *p*(i, j+1) of the i^{th} particle in the (j+1)^{th} display frame is located outside of the predetermined display area.

Alternatively, the processor may be configured to: determine, for a i^{th} particle, a position *p*(i, j+1) of the i^{th} particle in a (j+1)^{th} display frame, according to a position *p*(i, j) of the i^{th} particle in a j^{th} display frame and a motion trajectory function *f*ᵢ corresponding to the i^{th} particle, wherein both i and j are positive integers. A position *p*(i,1) of the i^{th} particle in a 1^{st} display frame is an initial position of the i^{th} particle.

Alternatively, a motion trajectory corresponding to the motion trajectory function *f*ᵢ may include any one of a linear motion trajectory, a curve motion trajectory, a circular motion trajectory and a bouncing motion trajectory, or any combination thereof.

Alternatively, the particle animation model may further include information about display style corresponding to each particle respectively.

Accordingly, the processor may further be configured to: determine, for each particle, a display style in each of the n display frames, according to information about display style corresponding to the particle. The display style may include any one of color, size, shape and display time, or any combination thereof.

Alternatively, the processor may further be configured to: form, for each display frame, a line successively connecting m particles included in the display frame, wherein m is an integer greater than or equivalent to 2.

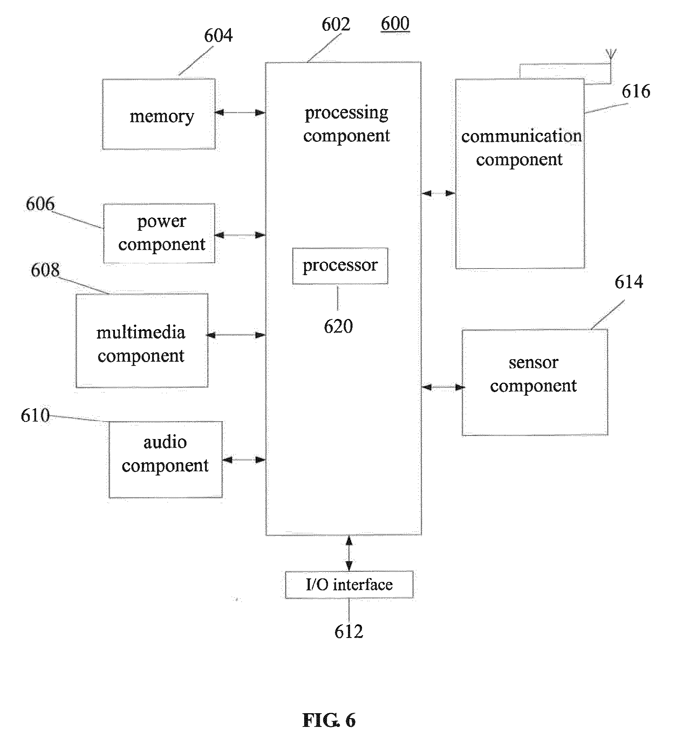

Fig. 6 is a block diagram of an device 600 according to an exemplary embodiment. For example, the device 600 may be a household equipment such as an air condition, a refrigerator, a washing machine, a water heater, an electric cooker, an air cleaner and a water purifier and the like. Or, an device 600 may also be a control device for controlling start and stop of a household equipment and work state of a household equipment. The control device may be a mobile terminal such as a remote controller, a mobile phone, a tablet computer and the like.

Referring to Fig. 6, the device 600 may include one or more of the following components: a processing component 602, a memory 604, a power component 606, a multimedia component 608, an audio component 610, an input/output (I/O) interface 612, a sensor component 614, and a communication component 616.

The processing component 602 typically controls overall operations of the device 600, such as the operations associated with display, telephone calls, data communications, camera operations, and recording operations. The processing component 602 may include one or more processors 620 to execute instructions to perform all or part of the steps in the above described methods. Moreover, the processing component 602 may include one or more modules which facilitate the interaction between the processing component 602 and other components. For instance, the processing component 602 may include a multimedia module to facilitate the interaction between the multimedia component 608 and the processing component 602.

The memory 604 is configured to store various types of data to support the operation of the device 600. Examples of such data include instructions for any applications or methods operated on the device 600, contact data, phonebook data, messages, pictures, video, etc. The memory 604 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 606 provides power to various components of the device 600. The power component 606 may include a power management system, one or more power sources, and any other components associated with the generation, management, and distribution of power for the device 600.

The multimedia component 608 includes a screen providing an output interface between the device 600 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 608 includes a front camera and/or a rear camera. The front camera and the rear camera may receive an external multimedia datum while the device 600 is in an operation mode, such as a photographing mode or a video mode. Each of the front camera and the rear camera may be a fixed optical lens system or have optical focusing and zooming capability.

The audio component 610 is configured to output and/or input audio signals. For example, the audio component 610 includes a microphone ("MIC") configured to receive an external audio signal when the device 600 is in an operation mode, such as a call mode, a recording mode, and a voice recognition mode. The received audio signal may be further stored in the memory 604 or transmitted via the communication component 616. In some embodiments, the audio component 610 further includes a speaker to output audio signals.

The I/O interface 612 provides an interface between the processing component 602 and peripheral interface modules, the peripheral interface modules being, for example, a keyboard, a click wheel, buttons, and the like. The buttons may include, but are not limited to, a home button, a volume button, a starting button, and a locking button.

The sensor component 614 includes one or more sensors to provide status assessments of various aspects of the device 600. For instance, the sensor component 614 may detect an open/closed status of the device 600, relative positioning of components (e.g., the display and the keypad, of the device 600), a change in position of the device 600 or a component of the device 600, a presence or absence of user contact with the device 600, an orientation or an acceleration/deceleration of the device 600, and a change in temperature of the device 600. The sensor component 614 may include a proximity sensor configured to detect the presence of a nearby object without any physical contact. The sensor component 614 may also include a light sensor, such as a CMOS or CCD image sensor, for use in imaging applications. In some embodiments, the sensor component 614 may also include an accelerometer sensor, a gyroscope sensor, a magnetic sensor, a pressure sensor, or a temperature sensor.

The communication component 616 is configured to facilitate communication, wired or wirelessly, between the device 600 and other devices. The device 600 can access a wireless network based on a communication standard, such as WiFi, 2G, or 3G, or a combination thereof. In an exemplary embodiment, the communication component 616 receives a broadcast signal or broadcast associated information from an external broadcast management system via a broadcast channel. In an exemplary embodiment, the communication component 616 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 604, executable by the processor 620 in the device 600, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium having stored therein instructions that, when executed by a processor of the device 600, cause the device 600 to perform a method provided in above embodiments shown in Fig. 2 or Fig. 3A.

Other embodiments of the invention will be apparent to those skilled in the art from consideration of the specification and practice of the disclosures herein. This application is intended to cover any variations, uses, or adaptations of the disclosure following the general principles thereof and including such departures from the present disclosure as come within known or customary practice in the art. It is intended that the specification and examples be considered as exemplary only, with a true scope of the invention being indicated by the following claims.

It will be appreciated that the inventive concept is not limited to the exact construction that has been described above and illustrated in the accompanying drawings.

## Claims

1. A method for showing work state of a device, **characterized in** comprising:
acquiring (202, 301) work state of a device;
acquiring (204, 302) a particle animation model corresponding to the work state; and
determining (206), according to the particle animation model, changing states in n display frames of at least one particle and playing (206), according to the changing states in n display frames of at least one particle, a particle animation, wherein n≥2 and n is an integer.

2. The method of claim 1, wherein the particle animation model comprises information about motion trajectory corresponding to each particle respectively; and
the step of determining (206), according to the particle animation model, changing states in n display frames of at least one particle, and playing (206), according to the changing states in n display frames of at least one particle, a particle animation comprises:
determining (303), for each particle, a position in each of the n display frames, according to information about motion trajectory corresponding to the particle; and
playing (304) the n display frames to form the particle animation.

3. The method of claim 2, further comprising:
detecting, for a i^{th} particle, whether a position *p*(i, j+1) of the i^{th} particle in a (j+1)^{th} display frame is located outside of a predetermined display area, wherein both i and j are positive integers; and
setting *p*(i, j+1) as an initial position of the i^{th} particle, if the position *p*(i, j+1) of the i^{th} particle in the (j+1)^{th} display frame is located outside of the predetermined display area.

4. The method of claim 2 or 3, wherein the step of determining (303), for each particle, a position in each of the n display frames, according to information about motion trajectory corresponding to the particle comprises:
determining, for a i^{th} particle, a position *p*(i, j+ 1) of the i^{th} particle in a (j+1)^{th} display frame, according to a position *p*(i, j) of the i^{th} particle in a j^{th} display frame and a motion trajectory function *f*ᵢ corresponding to the i^{th} particle, wherein both i and j are positive integers;
wherein, a position *p*(i,1) of the i^{th} particle in a 1^{st} display frame is an initial position of the i^{th} particle.

5. The method of claim 4, wherein a motion trajectory corresponding to the motion trajectory function *f*ᵢ comprises any one of: a linear motion trajectory; a curved motion trajectory; a circular motion trajectory; and a bouncing motion trajectory, or any combination thereof.

6. The method of any of claims 2 to 5, wherein the particle animation model further comprises information about display style corresponding to each particle respectively; and
the step of determining (206), according to the particle animation model, changing states in n display frames of at least one particle, and playing (206), according to the changing states in n display frames of at least one particle, a particle animation further comprises:
determining, for each particle, a display style in each of the n display frames, according to information about display style corresponding to the particle;
wherein the display style comprises any one of color, size, shape and display time, or any combination thereof.

7. The method of any of claims 2 to 6, further comprising:
forming, for each display frame, a line successively connecting m particles included in the display frame, wherein m is an integer greater than or equivalent to 2.

8. The method of any of the preceding claims, further comprising:
detecting values of key parameters for the appliance in the work state;
calculating a value distribution of key parameters based on the detected values of key parameters; and
determining, according to the particle animation model and the value distribution of key parameters, changing states in n display frames of at least one particle.

9. The method of any of the preceding claims, wherein the display is a touch screen; and wherein the method further comprises:
receiving, via the touch screen, a user action executed on the particle animation to change a distribution of particles within the particle animation;
generating a control instruction in accordance with the user action; and
controlling the appliance to change its operating state based on the control instruction.

10. A device for showing work state of a device, **characterized in** comprising:
a state acquiring module (410), configured to acquire work state of a device;
a model acquiring module (420), configured to acquire a particle animation model corresponding to the work state; and
an animation playing module (430), configured to determine, according to the particle animation model, changing states in n display frames of at least one particle, and to play, according to the changing states in n display frames of at least one particle, a particle animation, wherein n≥2 and n is an integer.

11. The device of claim 10, wherein the particle animation model comprises information about motion trajectory corresponding to each particle respectively;
the animation playing module (430) comprises a position determining sub-module (430a) and an animation playing sub-module (430b);
the position determining sub-module (430a) is configured to determine, for each particle, a position in each of the n display frames, according to information about motion trajectory corresponding to the particle; and
the animation playing sub-module (430b) is configured to play the n display frames to form the particle animation.

12. The device of claim 11, wherein the animation playing module (430) further comprises a detecting sub-module (430c) and a setting sub-module (430d);
the detecting sub-module (430c) is configured to detect, for a i^{th} particle, whether a position *p*(1, j+1) of the i^{th} particle in a (j+1)^{th} display frame is located outside of a predetermined display area, wherein both i and j are positive integers; and
the setting sub-module (430d) is configured to set *p*(1, j+ 1) as an initial position of the i^{th} particle, if the position *p*(1, j+1) of the i^{th} particle in the (j+1)^{th} display frame is located outside of the predetermined display area.

13. The device of claim 11 or 12, wherein,
the position determining sub-module (430a) is configured to determine, for a i^{th} particle, a position *p*(i, j+1) of the i^{th} particle in a (j+1)^{th} display frame according to a position *p*(i, j) of the i^{th} particle in a j^{th} display frame and a motion trajectory function *f*ᵢ corresponding to the i^{th} particle, wherein both i and j are positive integers;
wherein, a position *p*(i, 1) of the i^{th} particle in a 1^{st} display frame is an initial position of the i^{th} particle.

14. The device of claim 11, 12 or 13, wherein the particle animation model further comprises information about display style corresponding to each particle respectively;
the animation playing module further comprises a style determining sub-module (430e); the style determining sub-module (430e) is configured to determine, for each particle, a display style in each of the n display frames, according to information about display style corresponding to the particle;
wherein the display style comprises any one of: color; size; shape; and display time, or any combination thereof.

15. The device of claim 11, 12, 13 or 14, wherein the animation playing module further comprises a line forming sub-module;
the line forming sub-module is configured to form, for each display frame, a line successively connecting m particles included in the display frame, wherein m is an integer greater than or equivalent to 2.

16. The device of any of claims 10 to 15, wherein the device further comprises:
a state acquiring sub-module configured to detect values of key parameters for the appliance in the operating state;
a calculation module, configured to calculate a value distribution of the key parameters based on the detected values of the key parameters; and
wherein the animation playing module, is further configured to determine, according to the particle animation model and the value distribution of key parameters, changing states in n display frames of at least one particle.

17. The device of any of claims 10 to 16, wherein the display is a touch screen; and wherein the device further comprises:
a user-action receiving module, configured to receive via the touch screen, a user action executed on the particle animation to change a distribution of particles within the particle animation;
an instruction module, configured to generate a control instruction in accordance with the user action; and
a control module, configured to control the appliance to change its operating state based on the control instruction.

18. A device for showing work state of a device, **characterized in** comprising:
a processor (620);
a memory (604) for storing instructions executable by the processor (620);
wherein the processor (620) is configured to carry out the method of any of claims 1 to 9.

19. A computer program including instructions for executing the steps of a method for showing work state of a device according to any one of claims 1 to 9 when said program is executed by a computer.
